# EUROPÄISCHE PATENTSCHRIFT

(11) **EP 3 501 728 B1**
(45) Veröffentlichungstag und Bekanntmachung des Hinweises auf die Patenterteilung: **15.04.2020**
(21) Anmeldenummer: 18210243.4
(22) Anmeldetag: 04.12.2018
(51) Int. Cl.: B23Q 1/76

(54) **LÜNETTE FÜR EINE WERKZEUGMASCHINE**
STEADY REST FOR A MACHINE TOOL
SUPPORT FIXE POUR UNE MACHINE-OUTIL

(30) Priorität: 19.12.2017 DE 202017107735 U
(43) Veröffentlichungstag der Anmeldung: 26.06.2019
(73) Patentinhaber: WEILER Werkzeugmaschinen GmbH, 91448 Emskirchen (DE)
(72) Erfinder: Kohl, Günter, 91564 Neuendettelsau (DE); Popp, Matthias, 90599 Dietenhofen (DE)
(74) Vertreter: Mielke, Klaus

(56) Entgegenhaltungen:
- CN-Y- 201 195 249
- DE-C- 375 113
- US-A- 2 894 450

## Beschreibung

Die Erfindung betrifft eine Lünette für eine Werkzeugmaschine mit einem Maschinenbett zur Führung eines rotationssymmetrischen Werkstücks. Solche Lünetten sind z.B. aus dem Patentdokument CN 201 195 249 Y bekannt.

Lünetten dienen bei Werkzeugmaschinen zur Führung eines rotationssymmetrischen Werkstücks während der Bearbeitung. Dabei sollen im Werkstück auftretende Schwingungen gedämpft und insbesondere bei langen bzw. dünnen Werkstücken ein Ausweichen des Werkstücks aufgrund des Eigengewichts und der vom Werkzeug ausgeübten Passivkräfte reduziert werden. Dabei muss das Werkstück so in der Lünette geführt sein, dass die Mittelachse des Werkstücks in der Lünette mit der Rotationsachse der Hauptspindel der Werkzeugmaschine fluchtet. Derartige Lünetten weisen zumindest zwei Stützkörper, wie z.B. Rollen oder Gleitkörper, auf, die jeweils über ein radiales Verstellmittel, wie z.B. eine Spindel mit Pinole, an das Werkstück angelegt werden.

Dabei tritt das Problem auf, dass jeder Stützkörper separat durch einen Maschinenbediener an das Werkstück angelegt werden muss. Dies erfordert handwerkliches Geschick des Bedieners und somit einen hohen zeitlichen Aufwand. Außerdem besteht die Gefahr einer Fehlbearbeitung des Werkstücks, wenn dieses durch die Stützkörper nicht fluchtend zur Rotationsachse der Hauptspindel in der Lünette geführt ist.

Der Erfindung liegt die Aufgabe zu Grunde, eine Lünette aufzuzeigen, die auf einfache Weise die Einstellung einer zentrischen Führung eines Werkstücks ermöglicht.

Die Aufgabe wird gelöst mit der im Anspruch 1 angegebenen Lünette. Vorteilhafte weitere Ausgestaltungen der Erfindung sind in den Unteransprüchen angegeben.

Die gemäß der Erfindung ausgeführte Lünette für eine Werkzeugmaschine mit einem Maschinenbett zur Führung eines rotationssymmetrischen Werkstücks weist auf einen Grundkörper zur Auflage auf das Maschinenbett, zumindest einen Linearantrieb quer zum Maschinenbett, womit zwei Antriebskörper in entgegengesetzter Richtung auf dem Grundkörper verfahrbar sind, zwei Scherenhebel, die quer zum Maschinenbett V-förmig angeordnet sind, wobei jeweils deren eines Ende am Grundkörper drehbar gehalten ist und deren anderes Ende eine Auflage für das Werkstück aufweist, und zwei Stützhebel, die jeweils an deren einem Ende an einem Antriebskörper und an deren anderem Ende an einem Scherenhebel im Bereich einer Auflage drehbar gehalten sind, sodass der Abstand zwischen den Auflagen durch scherenartige Schwenkung der Scherenhebel mittels Verfahren der Antriebskörper veränderbar ist.

Die Scherenhebel sind gegenüberliegend schräg zueinander ausgerichtet, wobei die einen Enden am Grundkörper näher aneinander angeordnet sind als die anderen Enden mit den Auflagen. Die Weite der Öffnung zwischen den anderen Enden ist somit durch Schwenkung der Scherenhebel veränderbar. Bei einer überwiegend horizontalen Schrägstellung der Scherenhebel weist die Öffnung eine größere Weite auf als bei einer überwiegend vertikalen Schrägstellung.

Bei Auflage eines Werkstücks auf diese V-förmige Öffnung liegt dieses an den Auflagen an den anderen Enden an und ist somit an zwei Punkten vertikal gestützt. Dabei kann die Weite der Öffnung in Abhängigkeit des Durchmessers des aufgelegten Werkstücks durch Schwenkung der Scherenhebel vorteilhaft so eingestellt werden, dass die Mittelachse des Werkstücks stets annähernd auf der Höhe der Rotationsachse der Hauptspindel angeordnet ist. So sind die Scherenhebel bei Auflage eines Werkstücks mit großem Durchmesser überwiegend flach geschwenkt. Dabei weist die Öffnung zwischen den anderen Enden eine große Weite auf. Bei Auflage eines Werkstücks mit geringem Durchmesser sind die Scherenhebel überwiegend steil zueinander geschwenkt, sodass die Öffnung eine geringe Weite aufweist. Dabei wird auch die vorteilhafte Wirkung erzielt, dass die erfindungsgemäße Lünette zur Führung einer Vielzahl von Werkstücken mit stark variierendem Durchmesser geeignet ist.

Die Auflagen liegen dabei so am Werkstück an, dass diese, unabhängig vom Durchmesser eines Werkstücks, um dessen die Mittelachse einen Winkel im Bereich von annähernd 90° bis 120° einnehmen. Dabei wird vorteilhaft eine besonders stabile Führung eines Werkstücks erzielt und die Gefahr des Herausspringens eines Werkstücks aus der Lünette während der Bearbeitung reduziert.

Die Stützhebel sind jeweils gegenüberliegend schräg zu den Scherenhebeln angeordnet und an deren anderem Ende an den Scherenhebeln drehbar gehalten. Bei überwiegend flacher Schwenkung der Scherenhebel sind die Stützhebel ebenso überwiegend flach angeordnet und bei überwiegend steiler Schwenkung der Scherenhebel überwiegend steil. Die Stützhebel stützen somit seitlich die Scherenhebel bei Auflage eines Werkstücks. Dabei wird die vorteilhafte Wirkung erzielt, dass eine Durchbiegung der Scherenhebel durch das Gewicht des aufgelegten Werkstücks reduziert und somit die Steifigkeit einer erfindungsgemäßen Lünette verbessert wird.

Die Stützhebel sind an deren einem Ende jeweils an einem Antriebskörper des Linearantriebs gehalten. Die Antriebskörper sind in entgegengesetzter Richtung auf dem Grundkörper verfahrbar. Die lineare Bewegung der Antriebskörper wird über die Stützhebel scherenartig auf die Schwenkhebel übertragen, sodass diese geschwenkt werden. Bei einem Verfahren der Antriebskörper von einander weg erfolgt durch Schwenkung der Scherenhebel eine Vergrößerung der Weite der Öffnung zwischen den Scherenhebeln. Scherenhebel und Stützhebel sind dann überwiegend flach angeordnet und die Lünette zur Führung eines Werkstücks mit großem Durchmesser eingestellt. Bei einem Verfahren der Antriebskörper aufeinander zu erfolgt durch Schwenkung der Scherenhebel eine Verkleinerung der Weite der Öffnung zwischen den Scherenhebeln. Scherenhebel und Stützhebel sind dann überwiegend steil angeordnet und die Lünette zur Führung eines Werkstücks mit geringem Durchmesser eingestellt.

Das Verfahren der Antriebskörper in entgegengesetzter Richtung erfolgt annähernd synchron mit gleichem Verfahrweg, sodass die Scherenhebel annähernd symmetrisch zueinander geschwenkt sind. Bei Schwenkung der Scherenhebel erfolgt somit annähernd keine Verschiebung des Werkstücks in horizontaler Richtung. Es erfolgt bei Verfahren der Antriebskörper annähernd ausschließlich eine Verschiebung der Mittelachse des Werkstücks in vertikaler Richtung.

Linearantrieb, Scherenhebel und Stützhebel sind auf dem Grundkörper quer zum Maschinenbett bzw. der Rotationsachse der Hauptspindel der Werkzeugmaschine angeordnet.

Eine gemäß der Erfindung ausgeführte Lünette bietet somit den besonderen Vorteil, dass ein Werkstück bereits bei dessen Auflage auf die Lünette horizontal in dieser zentriert ist und dies bei Betätigung des Linearantriebs annähernd unverändert bleibt. Die vertikale Zentrierung des Werkstücks erfolgt durch Betätigung des nur einen Verstellmittels, nämlich des Linearantriebs. Ein Werkstück ist somit in einer erfindungsgemäßen Lünette mit geringem zeitlichem Aufwand zentrisch führbar.

Eine gemäß der Erfindung ausgeführte Lünette bietet weiterhin den Vorteil eines großen Schwenkbereichs der Scherenhebel, sodass Werkstücke mit einem stärker variierenden Durchmesser führbar sind, als dies in Lünetten gemäß dem Stand der Technik möglich ist. Eine erfindungsgemäße Lünette ist somit besonders universell zur Führung einer Vielzahl von Werkstücken geeignet.

Eine gemäß der Erfindung ausgeführte Lünette ist besonders zur Verwendung in konventionellen oder zyklengesteuerten Drehmaschinen geeignet.

Gemäß einer weiteren vorteilhaften Ausführung der Erfindung weist der Linearantrieb eine Gewindespindel mit zwei Abschnitten mit gegenläufigen Gewindegängen und darin jeweils eine Gewindemutter als Antriebskörper auf. Die Gewindespindel kann entweder einstückig mit einem Richtungswechsel im Gewinde oder durch Kopplung zweier Teilspindeln mit jeweils gegenläufigen Gewindegängen ausgeführt sein. Diese Ausführung eines Linearantriebs ist vorteilhaft mit einfachen technischen Mitteln ausführbar.

Die Gewindespindel ist besonders vorteilhaft als Trapezgewindespindel ausgeführt. Eine derartige Spindel weist eine sogenannte Selbsthemmung auf, sodass eine Verschiebung einer Spindelmutter an der Trapezgewindespindel bei axialer Krafteinwirkung annähernd nicht erfolgt. Dabei wird die vorteilhafte Wirkung erzielt, dass nach Schwenkung der Scherenhebel das Aufbringen einer Haltekraft zur Aufrechterhaltung der Schwenkposition nicht notwendig ist.

Bei einer weiteren vorteilhaften Ausführung der Erfindung weist die Lünette einen Spindelmotor zum Antrieb der Gewindespindel auf. Es ist somit eine motorische Rotation der Gewindespindel möglich. Dabei wird vorteilhaft manueller Kraftaufwand zum Verfahren des Linearantriebs für einen Bediener vermieden.

In einer weiteren vorteilhaften Ausführung der Erfindung weist der Linearantrieb zwei fluchtende Teilspindeln mit gegenläufigen Gewindegängen und daran jeweils eine Gewindemutter als Antriebskörper auf. Die Schwenkung der Scherenhebel erfolgt durch eine synchrone Rotation der Teilspindeln. Die Ausführung bietet den besonderen Vorteil, dass nach Einrichtung der Lünette zur Führung des Werkstücks während eines Bearbeitungsprozesses die Mittelachse des Werkstücks durch Verstellung einer Spindel verschiebbar ist. Es können so vorteilhaft Verschiebungen der Mittelachse durch Verformungen des Werkstücks ausgeglichen und somit die Genauigkeit des Werkstücks weiter verbessert werden.

Gemäß einer weiteren vorteilhaften Ausführung der Erfindung weist die Lünette jeweils einen Spindelmotor zum Antrieb einer Teilspindel auf. Es erfolgt somit eine motorische Rotation der Teilspindeln. Dabei wird vorteilhaft manueller Kraftaufwand zum Verfahren des Linearantriebs für einen Bediener vermieden.

Bei einer weiteren vorteilhaften Ausführung der Erfindung weist die Lünette eine Steuerung für den Linearantrieb auf. Diese wirkt auf den Linearantrieb so ein, dass die Antriebskörper so weit verfahren sind, dass die Scherenhebel ohne manuellen Eingriff durch einen Bediener die gewünschte Schwenkposition einnehmen. Es wird so vorteilhaft der Aufwand zur Einstellung der Führung eines Werkstücks in einer Lünette weiter reduziert.

Die Steuerung weist vorteilhaft Mittel zur Eingabe von Parametern zum Verfahren der Antriebskörper auf. Besonders vorteilhaft weist die Steuerung Mittel zur Eingabe des Durchmessers des zu führenden Werkstücks als Parameter auf. Die Steuerung wirkt dann auf den Linearantrieb derart ein, dass die Antriebskörper so weit verfahren sind, dass die Scherenhebel eine Schwenkposition einnehmen, in der die Mittelachse des Werkstücks auf annähernd der Höhe der Rotationsachse der Hauptspindel liegt. Dabei wird die vorteilhafte Wirkung erzielt, dass das Werkstück in der Lünette automatisiert ohne manuelle Einrichtung durch einen Bediener sowohl horizontal als auch vertikal annähernd zentrisch in der Lünette geführt ist. Es wird so der Aufwand zur Einstellung der zentrischen Führung des Werkstücks für einen Bediener weiter reduziert.

In einer weiteren vorteilhaften Ausführung der Erfindung sind die Scherenhebel überkreuzt angeordnet und deren eine Enden separat am Grundkörper drehbar gehalten. Die Schrägstellung der Scherenhebel ist somit weiter verstärkt. Es wird so vorteilhaft der Winkel der Anlagen zur Mittelachse des Werkstücks weiter vergrößert und somit die Führung des Werkstücks in der Lünette weiter verbessert.

Gemäß einer weiteren vorteilhaften Ausführung der Erfindung ist zumindest ein Scherenhebel über den Linearantrieb annähernd bis auf den Grundkörper absenkbar. Der Antriebskörper des zumindest einen Scherenhebels ist durch den Linearantrieb besonders weit nach außen verfahrbar, sodass Stützhebel und Scherenhebel annähernd an dem Grundkörper anliegen. Die Auflage des jeweiligen Scherenhebels ist dabei besonders tief abgesenkt, sodass die Lünette im Bereich des abgesenkten Scherenhebels eine besonders geringe Höhe aufweist. Dabei wird die vorteilhafte Wirkung erzielt, dass eine vorteilhaft ausgeführte Lünette auch mit einem in der Werkzeugmaschine eingespannten Werkstück in die Werkzeugmaschine einführbar und auf dem Maschinenbett absetzbar bzw. vom Maschinenbett abhebbar und aus der Werkzeugmaschine entnehmbar ist.

Bei einer weiteren vorteilhaften Ausführung der Erfindung ist ein Stützhebel an einem Scherenhebel im Bereich zwischen dessen Auflage und einem Ende drehbar gehalten. Der Stützhebel ist somit nicht unmittelbar an der Auflage des Scherenhebels gehalten. Es ist so vorteilhaft in der Art einer Hebelwirkung ein schnelleres Schwenken eines Schwenkhebels möglich, sodass die Dauer zur Einstellung der Führung eines Werkstücks weiter reduziert ist. Weiterhin kann das andere Ende des Schwenkhebels so besonders schlank ausgeführt werden, sodass vorteilhaft eine Führung eines Werkstücks auch an schmalen Absätzen möglich ist.

In einer weiteren vorteilhaften Ausführung der Erfindung weist die Lünette eine Oberführung am Grundkörper mit einer auf das Werkstück absenkbaren dritten Auflage auf. Das Werkstück ist somit an einem dritten Punkt von oben gestützt. Dabei werden vorteilhaft Vibrationen im Werkstück während der Bearbeitung weiter reduziert und somit die Maßgenauigkeit des Werkstücks weiter verbessert.

Gemäß einer weiteren vorteilhaften Ausführung der Erfindung weist die Oberführung eine Vertikalstütze und einen daran drehbar gehaltenen Schwenkarm mit der dritten Auflage auf. Die Vertikalstütze verläuft annähernd vertikal, wobei die dritte Anlage am Schwenkarm über das Werkstück ragt. Die dritte Anlage ist durch Schwenken des Schwenkarms an das Werkstück anlegbar. Der Schwenkarm ist außerdem vom Werkstück weg aus dem Bereich oberhalb des Werkstücks herausschwenkbar, sodass die Lünette von oben zugänglich und so vorteilhaft ein Absenken eines Werkstücks in die Lünette mit einer Hubvorrichtung möglich ist.

Bei einer weiteren vorteilhaften Ausführung der Erfindung weist die Lünette einen Linearantrieb für den Schwenkarm an der Vertikalstütze auf. Der Linearantrieb ist an Vertikalstütze und Schwenkarm gehalten, sodass aufgrund der linearen Bewegung des Linearantriebs die Schwenkung des Schwenkarms um dessen Lagerpunkt an der Vertikalstütze erfolgt. Es ist so vorteilhaft die Aufbringung einer annähernd konstanten Spannkraft über die dritte Auflage auf das Werkstück möglich.

In einer weiteren vorteilhaften Ausführung der Erfindung weist die Lünette eine Kurbelspindel als Linearantrieb für den Schwenkarm auf. Die Kurbelspindel weist jeweils eine Spindelmutter an der Vertikalstrebe und am Schwenkarm auf. Der Schwenkarm ist durch Rotation der Kurbelspindel und Veränderung des Abstands der Spindelmutter zueinander schwenkbar. Die Ausführung eines Linearantriebs als Kurbelspindel ist vorteilhaft technisch einfach. Die Kurbelspindel ist ebenfalls besonders vorteilhaft als Trapezgewindespindel mit Selbsthemmung ausgeführt.

Gemäß einer weiteren vorteilhaften Ausführung der Erfindung weist die Lünette einen Spindelmotor zum Antrieb der Kurbelspindel auf. Die Rotation der Kurbelspindel und das Schwenken des Schwenkarms erfolgen somit motorisch angetrieben. Dabei wird vorteilhaft manueller Kraftaufwand zum Verfahren des Linearantriebs für einen Bediener vermieden.

Bei einer weiteren vorteilhaften Ausführung der Erfindung weist die Lünette eine Steuerung für den Spindelmotor auf. Diese wirkt auf den Spindelmotor so ein, dass Schwenkhebel und dritte Auflage ohne manuellen Eingriff durch einen Bediener automatisiert die gewünschte Schwenkposition einnehmen. Es wird so vorteilhaft der Aufwand zum Anlegen der dritten Anlage an das Werkstück für einen Bediener weiter reduziert.

In einer weiteren vorteilhaften Ausführung der Erfindung weist die Lünette eine Hebeöse an der Oberführung im Bereich der dritten Auflage auf. Die Hebeöse ist somit annähernd über dem Schwerpunkt der Lünette angeordnet. Es wird so vorteilhaft beim Aufsetzen auf das bzw. beim Entnehmen der Lünette vom Maschinenbett die Gefahr des Kippens der Lünette reduziert.

Gemäß einer weiteren vorteilhaften Ausführung der Erfindung ist eine Auflage als Führungsrolle ausgeführt. Bei Anlage der Führungsrolle liegt diese am Werkstück an und rotiert synchron mit diesem mit. Dabei werden vorteilhaft Reibungskräfte zwischen Auflage und Werkstück und die Gefahr einer Beschädigung des Werkstücks durch die Auflage reduziert.

Bei einer weiteren vorteilhaften Ausführung der Erfindung weist der Grundkörper eine Auflagefläche und eine Führungsnut zur Auflage auf das Maschinenbett auf. Führungsnut und Auflagefläche verlaufen quer zu Linearantrieb, Scherenhebel und Stützhebel an der abgewandten Seite des Grundkörpers. Die Lünette ist so entlang der Führungsnut auf dem Maschinenbett axial verschiebbar. Die Führungsnut ist dabei so im Grundkörper positioniert, dass die Mittelachse eines auf die Lünette aufgelegten Werkstücks annähernd vertikal unterhalb der Rotationsachse der Hauptspindel verläuft. So ist das Werkstück bereits bei Auflage auf die Lünette horizontal zur Rotationsachse der Hauptspindel zentriert und ist durch Betätigung des Linearantriebs für die Scherenhebel vertikal zentrierbar. Es wird so besonders vorteilhaft eine besonders einfache und aufwandsarme Zentrierung eines Werkstücks zur Rotationsachse der Hauptspindel ermöglicht.

Der Linearantrieb kann bei weiteren vorteilhaften Ausführungen der Erfindung andere technische Mittel zum Verfahren der Antriebskörper aufweisen. So weist der Linearantrieb in einer weiteren vorteilhaften Ausführung der Erfindung zumindest einen Hydraulikzylinder zum Verfahren der Antriebskörper auf dem Grundkörper auf. Gemäß einer weiteren vorteilhaften Ausführung der Erfindung weist der Linearantrieb zumindest einen umlaufenden Hülltrieb auf, wobei jeweils ein Antriebskörper an einem Trum des Hülltriebs gehalten ist.

Bei einer weiteren vorteilhaften Ausführung der Erfindung weist der Linearantrieb zumindest einen Linearmotor zum Verfahren der Antriebskörper auf dem Grundkörper auf. In einer weiteren vorteilhaften Ausführung der Erfindung weist der Linearantrieb zumindest eine Zahnstange zum Verfahren der Antriebskörper auf dem Grundkörper auf. Lünetten gemäß diesen vorteilhaften Ausführungen weisen ebenfalls die beschriebenen Vorteile auf.

Die Erfindung und weitere vorteilhafte Ausführungen derselben werden anhand der kurz angeführten Figuren nachfolgend näher erläutert. Dabei zeigt
- Fig. 1: eine erste beispielhafte, gemäß der Erfindung ausgeführte Lünette in einer schematischen Frontalansicht,
- Fig. 2: eine zweite beispielhafte, gemäß der Erfindung ausgeführte Lünette in einer schematischen Frontalansicht,
- Fig. 3: eine dritte beispielhafte, gemäß der Erfindung ausgeführte Lünette in einer schematischen Frontalansicht, wobei die Scherenhebel V-förmig geöffnet sind,
- Fig. 4: die dritte beispielhafte, gemäß der Erfindung ausgeführte Lünette in einer schematischen Frontalansicht, wobei die Scherenhebel V-förmig geschlossen sind,
- Fig. 5: eine vierte beispielhafte, gemäß der Erfindung ausgeführte Lünette in einer schematischen Frontalansicht mit einer Oberführung,
- Fig. 6: eine fünfte beispielhafte, gemäß der Erfindung ausgeführte Lünette in einer schematischen Frontalansicht, und
- Fig. 7: eine sechste beispielhafte, gemäß der Erfindung ausgeführte Lünette in einer schematischen Frontalansicht.

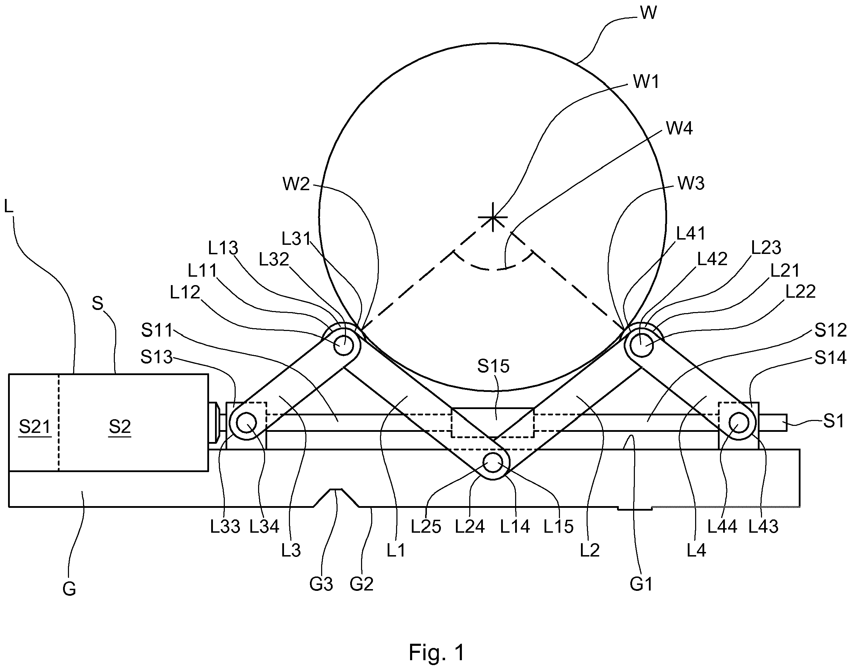

Gemäß der Darstellung in Fig. 1 weist die Lünette L einen Grundkörper G zur Auflage auf das Maschinenbett auf. Dieser ist überwiegend flach ausgeführt, und weist an der Oberseite eine Gleitfläche G1 auf. Eine Werkzeugmaschine mit einer Hauptspindel und einem Maschinenbett sind in den vorliegenden Figuren zur Verbesserung der Erkennbarkeit nicht dargestellt.

Erfindungsgemäß weist die Lünette L zumindest einen Linearantrieb S quer zum Maschinenbett auf, womit zwei Antriebskörper S13, S14 in entgegengesetzter Richtung auf dem Grundkörper G verfahrbar sind. Der Linearantrieb S ist vorliegend vorteilhaft als Gewindespindel S1 mit zwei Abschnitten S11, S12 ausgeführt. Diese weisen jeweils gegenläufige Gewindegänge mit einer Gewindemutter als Antriebskörper S13, S14 auf. Die Abschnitte S11, S12 sind über ein Kopplungselement S15 zu der einstückigen Gewindespindel S1 verbunden. Durch Rotation der Gewindespindel S1 sind die Antriebskörper S13, S14 somit in entgegengesetzter Richtung verfahrbar. Die Antriebskörper S13, S14 gleiten dabei auf der Gleitfläche G1 des Grundkörpers G. Die Gewindespindel ist vorteilhaft als Trapezgewindespindel ausgeführt, kann jedoch ebenso als Kugelgewindespindel oder Rollengewindespindel ausgeführt sein.

Die Lünette weist außerdem erfindungsgemäß zwei Scherenhebel L1, L2 auf, die quer zum Maschinenbett V-förmig angeordnet sind. Diese sind jeweils an deren einem Ende am Grundkörper G drehbar gehalten. Vorliegend sind der erste Scherenhebel L1 an dessen erstem Lagerende L14 am ersten Lagerdrehpunkt L15 und der zweite Scherenhebel L2 an dessen zweitem Lagerende L24 am zweiten Lagerdrehpunkt L25 jeweils am Grundkörper G drehbar gehalten. Der erste Lagerdrehpunkt L15 und der zweite Lagerdrehpunkt L25 überlappen, sodass die Scherenhebel L1, L2 einen gemeinsamen Drehpunkt am Grundkörper G aufweisen. Weiterhin weisen die Scherenhebel L1, L2 an deren anderem Ende eine Auflage L13, L23 für das Werkstück W auf. So weist der erste Scherenhebel L1 an dessen erstem Führungsende L11 einen ersten Führungsdrehpunkt L12 auf, an dem die erste Auflage L13 angeordnet ist und der zweite Scherenhebel L2 an dessen zweitem Führungsende L21 einen zweiten Führungsdrehpunkt L22 auf, an dem die zweite Auflage L23 angeordnet ist. Die Auflagen L13, L23 sind vorliegend vorteilhaft als Führungsrollen ausgeführt, die jeweils um die Führungsdrehpunkte L12, L22 drehbar gelagert sind. In einer weiteren vorteilhaften Ausführung der Erfindung sind die Auflagen L13, L23 als Gleitkörper, insbesondere Gleitpilze, ausgeführt.

Das Werkstück W ist auf die V-förmige Öffnung zwischen den Scherenhebeln L1, L2 aufgelegt und ist am ersten Anlagepunkt W2 an der ersten Auflage L13 und am zweiten Anlagepunkt W3 an der zweiten Auflage L23 gestützt. Die Anlagepunkte W2, W3 spannen um die Mittelachse W1 des Werkstücks W einen Stützwinkel W4 auf. Dieser beträgt vorteilhaft 90° bis 120°. Dabei ist das Werkstück W in der Öffnung zwischen den Scherenhebeln L1, L2 vorteilhaft besonders sicher geführt. Das Werkstücks W ist somit zwischen den Auflagen L13, L23 stets in der Lünette L horizontal zentriert.

Außerdem weist die Lünette L erfindungsgemäß zwei Stützhebel L3, L4 auf. Diese sind jeweils an deren einem Ende an einem Antriebskörper S13, S14 drehbar gehalten. So ist der erste Stützhebel L3 an dessen erstem Gleitende L33 am ersten Gleitdrehpunkt L34 am ersten Antriebskörper S13 und der zweite Stützhebel L4 an dessen zweitem Gleitende L43 am zweiten Antriebskörper S14 drehbar gehalten. Die Scherenhebel L3, L4 sind jeweils an deren anderem Ende an einem Scherenhebel L1, L2 im Bereich einer Auflage L13, L23 drehbar gehalten. Dabei ist der erste Stützhebel L3 an dessen erstem Stützende L31 über den ersten Stützdrehpunkt L32 am ersten Scherenhebel L1 im Bereich der ersten Auflage L13 und der zweite Stützhebel L4 an dessen zweitem Stützende L41 über den zweiten Stützdrehpunkt L42 am zweiten Scherenhebel L2 im Bereich der zweiten Auflage L23 drehbar gehalten. Im vorliegenden Ausführungsbeispiel überlappen das erste Führungsende L11 des ersten Scherenhebels L1 und das erste Stützende L31 des ersten Stützhebels L2 sowie das zweite Führungsende L21 des zweiten Scherenhebels L2 und das zweite Stützende L41 des zweiten Stützhebels L4.

Gemäß der Erfindung ist somit der Abstand zwischen den Auflagen L13, L23 durch scherenartige Schwenkung der Scherenhebel L1, L2 mittels Verfahren der Antriebskörper S13, S14 veränderbar. Dabei erfolgte eine synchrone, gegenläufige Schwenkung der Scherenhebel zueinander. Scherenhebel L1, L2 und Stützhebel L3, L4 bilden dabei eine Art Tragwerk, dessen Weite bzw. Höhe durch Verfahren der Antriebskörper S13, S14 mittels des Linearantriebs S veränderbar ist. Dabei erfolgt eine Verlagerung der Mittelachse W1 des Werkstücks W annähernd nur in vertikaler Richtung. Es wird so die vorteilhafte Wirkung erzielt, dass die vertikale Zentrierung des Werkstücks W in der Lünette, sodass die Mittelachse W1 des Werkstücks W mit der Rotationsachse der Hauptspindel der Werkzeugmaschine fluchtet, durch einfache Verstellung nur eines Verstellmittels, nämlich des Linearantriebs, erfolgt.

Bei Auflage eines Werkstücks mit großem Durchmesser erfolgt eine Schwenkung der Scherenhebel voneinander weg, sodass die Auflagen einen großen Abstand zueinander einnehmen und bei Auflage eines Werkstücks mit einem kleinen Durchmesser erfolgt eine Schwenkung der Scherenhebel aufeinander zu, sodass die Auflagen einen kleinen Abstand zueinander einnehmen. Gemäß der Darstellung von Fig. 1 weist das Werkstück W einen großen Durchmesser auf, sodass die Scherenhebel L1, L2 weit geschwenkt sind und die Auflagen K13, L23 einen großen Abstand zueinander aufweisen. Die Antriebskörper S13, S14 liegen dabei jeweils an den außenliegenden Enden der Abschnitte S11, S12 der Gewindespindel, sodass die Scherenhebel L1, L2 die weiteste Öffnung einnehmen. Die Lünette L ist so zur Führung eines Werkstücks mit dem größtmöglichen Durchmesser eingestellt. Das Werkstück W ist in der vorliegenden Figur als ein Werkstück mit größtmöglich führbarem Durchmesser dargestellt.

Bei Schwenkung der Scherenhebel L1, L2 erfolgt eine Bewegung der Auflagen L13, L23 auf annähernd der Bahn eines Kreisbogens um die Lagerdrehpunkte L15, L25 der Scherenhebel L1, L2 mit einem Radius, welcher annähernd den Abstand zwischen dem Lagerdrehpunkt L15, L25 und der Auflage K13, L23 eines Scherenhebels L1, L2 beträgt. Dabei wird die vorteilhafte Wirkung erzielt, dass der Stützwinkel W4 der Auflagen L13, L23 unabhängig vom Durchmesser des Werkstücks W immer annähernd 90° bis 120° beträgt.

Die Lünette L weist an der Unterseite des Grundkörpers G eine Führungsnut G3 und eine Auflagefläche G2 für das Maschinenbett auf. Die Lünette L ist somit geometrisch definiert auf das Maschinenbett aufsetzbar und auf diesem verschiebbar. Besonders vorteilhaft ist die Führungsnut G3 so positioniert, dass die Mittelachse W1 eines aufgelegten Werkstücks W annähernd vertikal zur Rotationsachse der Hauptspindel der Werkzeugmaschine verläuft. Dabei wird die vorteilhafte Wirkung erzielt, dass ein Werkstück bereits bei Auflage auf die Auflagen der Scherenhebel horizontal zentriert ist und auf einfache Weise durch Verstellung des Linearantriebs vertikal zentrierbar ist.

Die Lünette L weist weiterhin vorteilhaft einen Spindelmotor S2 zum Antrieb der Gewindespindel S1 auf. Dieser ist an einem Ende der Gewindespindel S1 fluchtend zu dieser auf dem Grundkörper G gehalten. Es ist so eine motorische Verstellung der Antriebskörper S13, S14 und Schwenkung der Scherenhebel L1, L2 möglich, sodass ein manueller Kraftaufwand für einen Bediener vermieden wird.

Die Lünette L weist außerdem vorteilhaft eine Steuerung für den Linearantrieb S auf. In der vorliegenden Figur ist die Motorsteuerung S21 für den ersten Spindelmotor S2 schematisch als strichlierter Teilbereich des Spindelmotors S2 dargestellt. Die Motorsteuerung S21 wirkt zur automatisierten Schwenkung der Scherenhebel auf den ersten Spindelmotor S2 ein, sodass der Aufwand zur Einstellung der Führung eines Werkstücks in der Lünette reduziert ist. Die Steuerung kann beispielhaft derart auf einen Spindelmotor einwirken, dass nach Eingabe eines zu führenden Werkstückdurchmessers oder einer Zeit bzw. Geschwindigkeit zum Verfahren der Antriebskörper, ein automatisiertes Schwenken der Scherenhebel bis zum Erreichen der eingegebenen Parameter erfolgt.

Gemäß weiterer vorteilhafter Ausführungen, die in den Figuren nicht separat dargestellt sind, weist der Linearantrieb S zumindest einen Hydraulikzylinder zum Verfahren der Antriebskörper S13, S14 auf dem Grundkörper G, zumindest einen umlaufenden Hülltrieb, wobei jeweils ein Antriebskörper S13, S14 an einem Trum des Hülltriebs gehalten ist, zumindest einen Linearmotor zum Verfahren der Antriebskörper S13, S14 auf dem Grundkörper G oder zumindest eine Zahnstange zum Verfahren der Antriebskörper S13, S14 auf dem Grundkörper G auf. Bei diesen Ausführungen wirkt der Linearantrieb S auf entsprechende Weise zur Schwenkung der Scherenhebel auf die Antriebskörper ein, sodass diese Ausführungen eine entsprechende Funktionsweise und die selben beschriebenen Vorteile aufweisen.

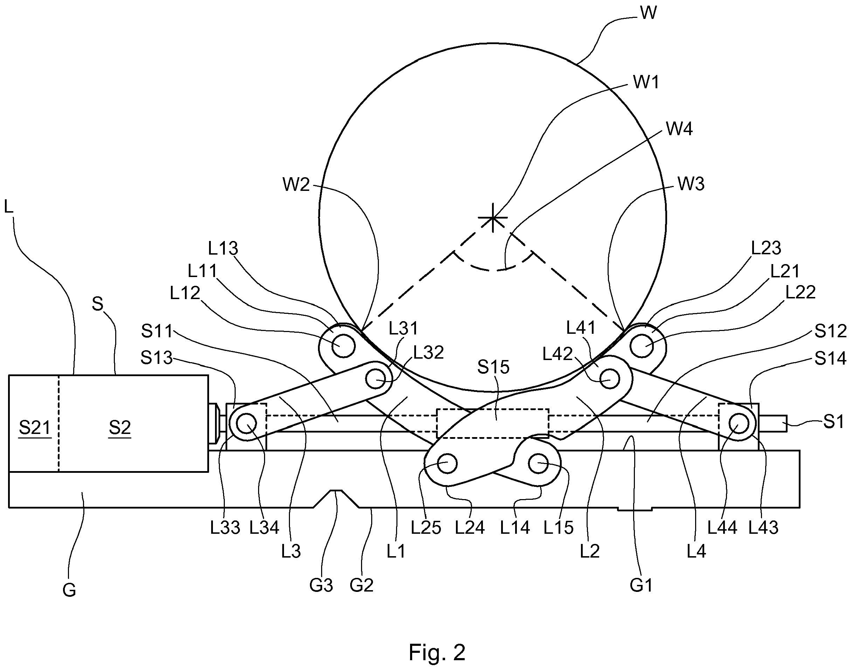

In Fig. 2 ist eine weitere vorteilhafte Ausführung einer erfindungsgemäßen Lünette L dargestellt. Diese weist ebenso einen Grundkörper G mit Gleitfläche G1, Auflagefläche G2 und Führungsnut G3 auf. Der Linearantrieb S ist gemäß den Erläuterungen zu Fig. 1 ausgeführt und weist eine Gewindespindel S1 mit zwei über ein Kopplungselement S15 verbundene Abschnitten S11, S12 mit gegenläufigen Gewindegängen und darin jeweils eine Gewindemutter als Antriebskörper S13, S14 und vorteilhaft einen Spindelmotor S2 zum Antrieb der Gewindespindel S1 und eine Motorsteuerung S21 auf.

Gemäß der vorteilhaften Ausführung sind die Scherenhebel L1, L2 überkreuzt angeordnet und deren eine Enden L14, L24 separat am Grundkörper G drehbar gehalten. So ist der erste Lagerdrehpunkt L15 des ersten Scherenhebels L1, der überwiegend nach links geschwenkt ist, rechts vom zweiten Lagerdrehpunkt L25 des zweiten Scherenhebels L2, der überwiegend nach rechts geschwenkt ist, angeordnet. Dabei wird die Schrägstellung der Scherenhebel weiter verbessert und insbesondere bei der Auflage von Werkstücken mit kleinem Durchmesser die sichere Führung des Werkstücks verbessert.

Die Stützhebel L3, L4 sind vorteilhaft an den Scherenhebeln L1, L2 im Bereich zwischen deren Auflagen L13, L23 und einem Ende L14, L24 drehbar gehalten. Der erste Stützhebel L3 ist an dessen erstem Stützende L31 am ersten Stützdrehpunkt L32 am ersten Scherenhebel L1 im Bereich unterhalb der ersten Auflage L13 und der zweite Stützhebel L4 an dessen zweitem Stützende L41 am zweiten Stützdrehpunkt L42 am zweiten Scherenhebel L2 im Bereich unterhalb der zweiten Auflage L23 drehbar gehalten. Die Stützdrehpunkte L32, L42 der Stützhebel L3, L4 überlappen somit im vorliegenden Ausführungsbeispiel nicht mit den Führungsdrehpunkten L12, L22 mit den Auflagen L13, L23.

Dabei wird vorteilhaft in der Art einer Hebelwirkung eine Erhöhung der Geschwindigkeit der Schwenkung der Scherenhebel bei Verfahren der Antriebskörper erzielt. Weiterhin wird die vorteilhafte Wirkung erzielt, dass ein Führungsende eines Scherenhebels besonders schmal ausführbar ist, sodass vorteilhaft die Führung eines Werkstücks auch an schmalen Absätzen möglich ist. Die Auflagen L13, L23 sind ebenso vorteilhaft als Führungsrolle ausgeführt.

Das Werkstück W weist in der vorliegenden Figur ebenso einen größtmöglich führbaren Durchmesser auf. Die Scherenhebel L1, L2 sind somit weit voneinander weg geschwenkt, dass die Auflagen L13, L23 einen großen Abstand zueinander aufweisen. So beträgt der größtmögliche führbare Werkstückdurchmesser der vorteilhaft ausgeführten Lünette L annähernd 600 Millimeter.

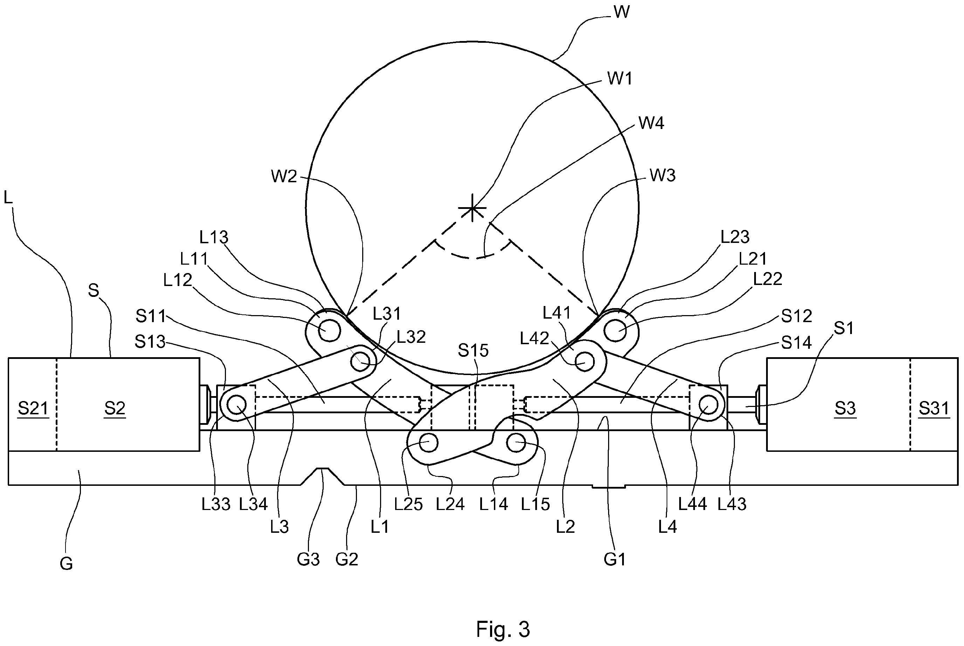

In Fig. 3 ist eine weitere vorteilhafte Ausführung einer erfindungsgemäßen Lünette L dargestellt. Die Scherenhebel L1, L2 sind ebenso vorteilhaft überkreuzt angeordnet und an deren Lagerenden K14, L24 separat am Grundkörper G gehalten. Die Stützhebel L3, L4 sind entsprechend der Ausführungen zu Fig. 2 an den Scherenhebeln L1, L2 in einem Bereich zwischen deren Auflagen L13, L23 und den Lagerenden L14, L24 drehbar gehalten.

Gemäß der vorliegenden vorteilhaften Ausführung weist der Linearantrieb S zwei fluchtende Teilspindeln S11, S12 mit gegenläufigen Gewindegängen und daran jeweils eine Gewindemutter als Antriebskörper S13, S14 auf. Zur Herbeiführung einer synchronen Schwenkung der Scherenhebel L1, L2 erfolgt eine synchrone Rotation der beiden Teilspindeln S11, S12 und somit ein synchrones Verfahren der Antriebskörper S13, S14. Diese Ausführung bietet den besonderen Vorteil der Nachstellbarkeit der Werkstückführung nach Einstellung der Werkstückführung. So können beispielsweise beim Auftreten hoher Passivkräfte während eines Bearbeitungsprozesses Verformungen im Maschinenbett durch Nachschwenkung eines Scherenhebels durch Rotation einer der Teilspindeln ausgeglichen werden.

Der Linearantrieb S weist außerdem vorteilhaft jeweils einen Spindelmotor S2, S3 zum Antrieb einer Teilspindel S11, S12 auf. Der erste Spindelmotor S2 treibt die erste Teilspindel S11 und der zweite Spindelmotor S3 die zweite Teilspindel S12 an. Die Teilspindeln S11, S12 sind jeweils an der Nabe des Spindelmotors S2, S3 und mittig an Lagerböcken gehalten.

Weiterhin weist der Linearantrieb vorteilhaft eine Steuerung für den Linearantrieb S auf. Die erste Motorsteuerung S21 für den ersten Spindelmotor S2 und die zweite Motorsteuerung S22 für den zweiten Spindelmotor S3 sind jeweils symbolhaft als strichlierter Teilbereich des jeweiligen Spindelmotors dargestellt. Die Motorsteuerungen können dabei entweder direkt am Spindelmotor angeordnet oder in einer zentralen Steuerung angeordnet sein.

Der Grundkörper G weist ebenso vorteilhaft eine Auflagefläche G2 und eine Führungsnut G3 zur Auflage auf das Maschinenbett auf. Vorliegend sind außerdem der erste Spindelmotor S2, und der zweite Spindelmotor S3 auf dem Grundkörper G gehalten.

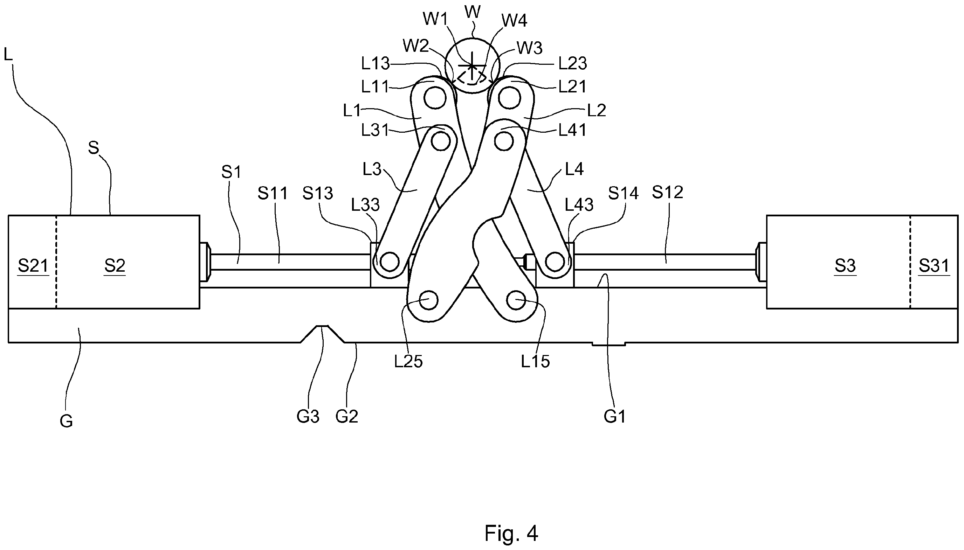

In Fig. 4 ist die Lünette L gemäß der vorteilhaften Ausführung von Fig. 3 dargestellt, wobei die Lünette L zur Führung eines Werkstücks mit kleinstmöglich führbarem Durchmesser eingestellt ist. Der kleinstmögliche führbare Werkstückdurchmesser der vorteilhaft ausgeführten Lünette L beträgt annähernd 100 Millimeter.

Die Antriebskörper S13, S14 sind auf den Teilspindeln S1, S2 der Gewindespindel des Linearantriebs S in der mittigen Endposition angeordnet, sodass Stützhebel L3, L4 und Scherenhebel L1, L2 in der steilsten Schwenkposition ausgerichtet sind. Die Auflagen L13, L23 an den Führungsenden L22, L21 der Scherenhebel L1, L2 weisen die zueinander kleinstmögliche Distanz auf. Das Werkstück W weist einen kleinstmöglich führbaren Durchmesser auf. Die Auflagen L13, L23, die ebenso vorteilhaft als Führungsrollen ausgeführt sind, liegen an den Anlagepunkten W2, W3 am Werkstück W an. Der Stützwinkel W4 zwischen den Anlagepunkten W2, W3 um die Mittelachse W1 des Werkstücks W beträgt ebenso annähernd 90° bis 120°. Die gemäß der Erfindung ausgeführte Lünette L ist somit zur sicheren, stabilen Führung von Werkstücken mit stark unterschiedlichem Durchmesser geeignet. Der Bereich von führbaren Werkstückdurchmessern beträgt annähernd 100 Millimeter bis 600 Millimeter. Die Mittelachse W1 des Werkstücks W fluchtet mit der Rotationsachse der Hauptspindel der Werkzeugmaschine.

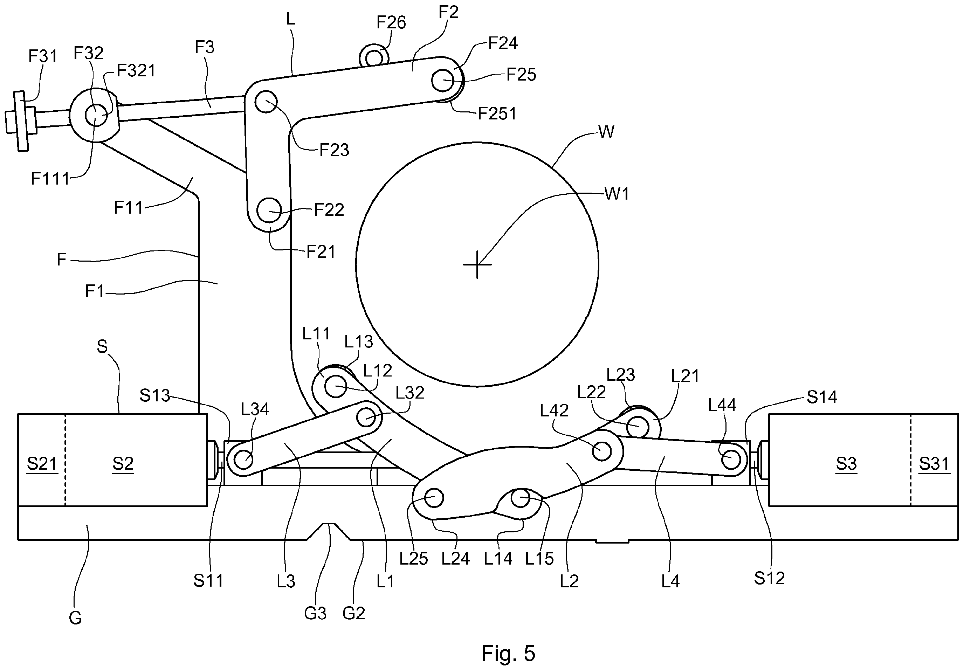

In Fig. 5 ist eine weitere, besonders vorteilhafte Ausführung einer erfindungsgemäßen Lünette L dargestellt.

Die Scherenhebel L1, L2 sind gemäß der vorteilhaften Ausführung der Fig. 3 und 4 ausgeführt. Die Scherenhebel L1, L2 sind vorteilhaft überkreuzt angeordnet und deren Lagerenden L14, L24 an separaten Lagerdrehpunkten L15, L25 drehbar gehalten.

Die Stützhebel L3, L4 sind an deren Gleitdrehpunkten L34, L44 an den Antriebskörpern S13, S14 des Linearantriebs S und an deren Stützdrehpunkten L32, L42 an den Scherenhebeln L1, L2 vorteilhaft im Bereich zwischen der Auflage L13, L23 und dem Lagerdrehpunkt L15, L25 des jeweiligen Scherenhebels L1, L2 gehalten. Die Führungsdrehpunkte L12, L22 der Scherenhebel L1, L2 und die Stützdrehpunkte L32, L42 der Stützhebel L3, L4 überlappen somit nicht. Die Auflagen L13, L23 an den Führungsenden L11, L21 der Scherenhebel L1, L2 sind vorteilhaft als Führungsrollen ausgeführt.

Der Linearantrieb S weist vorteilhaft zwei fluchtende Teilspindeln S11, S12 mit gegenläufigen Gewindegängen und daran jeweils eine Gewindemutter als Antriebskörper S13, S14 auf. Der Linearantrieb S weist außerdem vorteilhaft jeweils einen Spindelmotor S2, S3 zum Antrieb der Teilspindeln S11, S12 auf. Außerdem weist der Linearantrieb S eine Steuerung auf. Die Motorsteuerungen S21, S31 für die Spindelmotoren S2, S3 sind symbolhaft als strichlierter Teilbereich des jeweiligen Spindelmotors dargestellt.

Die Lünette weist einen Grundkörper G gemäß der Ausführung von Fig. 3 und 4 auf. Die Scherenhebel L1, L2 sind an deren Lagerdrehpunkten L15, L25 am Grundkörper G drehbar gehalten. Der erste, zweite Spindelmotor S2, S3 sind auf dem Grundkörper G gehalten und der erste, zweite Antriebskörper K13, S14 gleiten auf der Gleitfläche G1 entlang. Der Grundkörper G weist außerdem an der Unterseite eine Führungsnut G3 und eine Auflagefläche G2 zur Auflage auf das Maschinenbett auf. Die Führungsnut G3 ist so positioniert, dass die Mittelachse W1 eines aufgelegten Werkstücks W annähernd vertikal zur Rotationsachse der Hauptspindel der Werkzeugmaschine verläuft.

Besonders vorteilhaft ist bei der vorliegenden Ausführung der Scherenhebel L2 über den Linearantrieb S annähernd bis auf den Grundkörper G absenkbar. Hierzu ist in der vorliegenden Ausführung der Antriebskörper S14 an der Teilspindel S12 weiter verfahrbar als der Antriebskörper S13 an der Teilspindel S11. Dies kann beispielhaft dadurch realisiert werden, dass die zweite Teilspindel S12 länger ausgeführt ist als die erste Teilspindel S11 und weitere Gewindegänge aufweist. Das weitere Absenken des Scherenhebels L2 erfolgt bei dieser vorteilhaften Ausführung der Erfindung durch separate weitere Rotation der Teilspindel S12. Der zweite Antriebskörper S14 ist in der Endposition an der Nabe des zweiten Spindelmotors S3 in Bezug auf die Mitte zwischen den Teilspindeln S11, S12 weiter außerhalb angeordnet als der erste Antriebskörper S13 an der Nabe des ersten Spindelmotors S2. Der zweite Scherenhebel L2 und der zweite Stützhebel L4 sind flacher geschwenkt als der erste Scherenhebel L1 und der erste Stützhebel L3, wobei der zweite Stützhebel L4 annähernd horizontal ausgerichtet ist. Die zweite Auflage L13 ist tiefer angeordnet als die erste Auflage L23. Diese Ausführung bietet den besonderen Vorteil, dass die Lünette L in der Hebelstellung gemäß der vorliegenden Figur auch auf ein Maschinenbett aufsetzbar bzw. von einem Maschinenbett entnehmbar ist, wenn das Werkstück W noch eingespannt ist. Das Werkstück W ist in der vorliegenden Darstellung noch in der Maschine eingespannt, sodass die Mittelachse W1 des Werkstücks W mit der Rotationsachse der Hauptspindel fluchtet. Die Scherenhebel L1, L2 sind bereits vom Werkstück W weg geschwenkt. Die Lünette L ist somit in perspektivisch linker Richtung vom Maschinenbett entnehmbar, sodass der zweite Spindelmotor S3 unter dem Werkstück W entlanggeführt ist. Eine weitere vorteilhafte Ausführung der Erfindung, bei der der Linearantrieb eine Gewindespindel mit zwei Abschnitten mit gegenläufigen Gewindegängen aufweist und beide Scherenhebel über den Linearantrieb S annähernd bis auf den Grundkörper absenkbar sind, ist nicht separat in den Figuren dargestellt.

Die erfindungsgemäße Lünette L gemäß der vorliegenden vorteilhaften Ausführung weist außerdem eine Oberführung F am Grundkörper G mit einer auf das Werkstück W absenkbaren dritten Auflage F251 auf.

Die Oberführung F weist vorteilhaft eine Vertikalstütze F1 und einen daran drehbar gehaltenen Schwenkarm F2 mit der dritten Auflage F251 auf. Der Schwenkarm F2 ist annähernd L-förmig ausgeführt und ist an dessen erstem Lagerende F21 am Lagerpunkt F22 an der Vertikalstütze F1 gehalten. An dem zweiten Stützende F24, welches oberhalb des Werkstücks W angeordnet ist, weist der Schwenkarm F2 am Stützdrehpunkt F25 die dritte Auflage F251 auf. Diese ist ebenso vorteilhaft als Führungsrolle ausgeführt.

Die Lünette L weißt außerdem vorteilhaft einen Linearantrieb F3 für den zweiten Schwenkarm F2 an der Vertikalstütze F1 auf. Der Linearantrieb F3 ist vorliegend vorteilhaft als Kurbelspindel ausgeführt und ist an dem Winkelpunkt F23 des Schwenkarms F2 und dem Kurbellager F111 an der Querstrebe F11 der Vertikalstütze F1 gehalten. Durch Rotation der Kurbelspindel F3 erfolgt eine Veränderung des Abstands zwischen Kurbellager F111 und Winkelpunkt F23 und somit eine Schwenkung des Schwenkarms um den Lagerpunkt F22. Die dritte Auflage F251 ist somit durch Vergrößerung des Abstands zwischen Kurbellager F111 und Winkelpunkt F23 durch Rotation der Kurbelspindel F3 auf das Werkstück W absenkbar. Die Kurbelspindel F3 weist außerdem eine Handkurbel F31 zur manuellen Rotation der Kurbelspindel F3 durch einen Bediener und somit zum manuellen Absenken der dritten Auflage F251 auf das Werkstück auf.

Die Lünette L weist weiterhin vorteilhaft einen Spindelmotor F32 zum Antrieb der Kurbelspindel F3 an. Dieser ist in der vorliegenden Figur symbolhaft im Kurbellager F111 angeordnet. Es ist so vorteilhaft eine motorische Verstellung des Linearantriebs F3 und somit eine motorische Absenkung der dritten Auflage F251 auf das Werkstück W ohne manuellen Aufwand für einen Bediener möglich.

Die Lünette L weist außerdem vorteilhaft eine Steuerung F321 für den Spindelmotor F32. Es ist so die automatisierte Verstellung des Linearantriebs F3 und automatisierte Absenkung der dritten Auflage F251 auf das Werkstück W möglich. Dies kann insbesondere im Gleichlauf mit der Verstellung des Linearantriebs S für den ersten, zweiten Scherenhebel L1, L2 mit der ersten, zweiten Auflage L13, L23 erfolgen. Die drei Auflagen können derart annähernd synchron automatisiert an das Werkstück angelegt werden. Dies kann insbesondere nach Eingabe des Durchmessers eines zu führenden Werkstücks in der Steuerung erfolgen. In der vorliegenden Figur ist die dritte Motorsteuerung F321 symbolhaft am dritten Spindelmotor F32 im Kurbellager F111 angeordnet.

Die Lünette L weist weiterhin vorteilhaft eine Hebeöse F26 an der Oberführung F im Bereich der dritten Auflage F251 auf. Die Hebeöse F26 ist vorliegend am Schwenkarm F2 zwischen Winkelpunkt F23 und zweitem Stützende F24 angeordnet und ermöglicht das Anheben der Lünette L von oben mittels einer Hubvorrichtung. Die Hebeöse F26 ist somit annähernd über dem Schwerpunkt der Lünette L angeordnet. Dabei wird die vorteilhafte Wirkung erzielt, dass die Lünette L annähernd ohne seitliches Verkippen vom Maschinenbett entnehmbar ist. Insbesondere die Entnahme der Lünette L bei eingespanntem Werkstück W wird dabei vorteilhaft erleichtert.

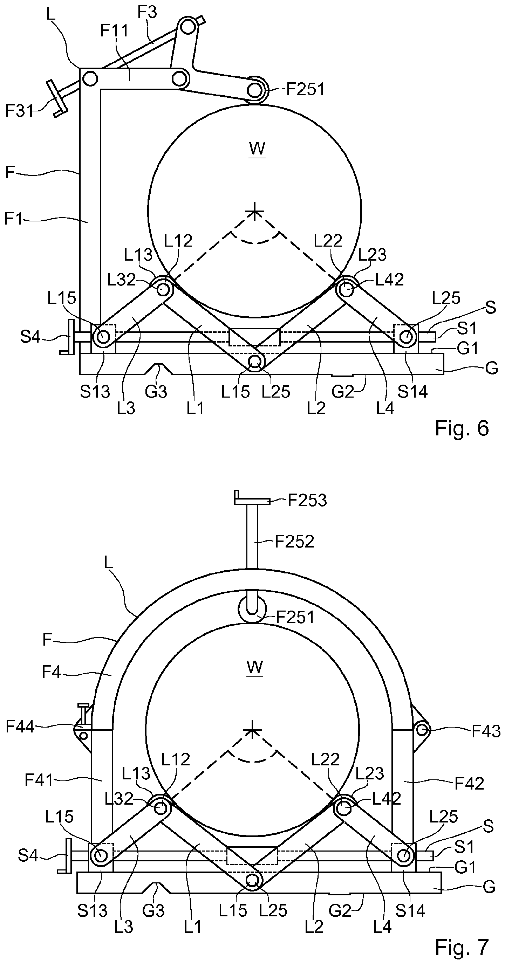

In Fig. 6 ist eine fünfte beispielhafte Ausführung einer erfindungsgemäßen Lünette L dargestellt. Die Lünette gemäß der vorliegenden Ausführung ist manuell durch einen Bediener zu verstellen und somit besonders einfach ausführbar.

Der Grundkörper G ist vorliegend besonders flach ausgeführt und weist ebenso eine Auflagefläche G2 mit Führungsnut G3 zur Auflage auf ein Maschinenbett sowie eine Gleitfläche G1 auf der Oberseite auf.

Die Anordnung von erstem, zweitem Scherenhebel L1, L2 sowie erstem, zweitem Stützhebel L3, L4 ist entsprechend der vorteilhaften Ausführung von Fig. 1 ausgeführt, wobei der erste, zweite Lagerdrehpunkt L15, L25 von erstem, zweitem Scherenhebel L1, L2 an einem gemeinsamen Punkt am Grundkörper G angeordnet sind und der erste, zweite Führungsdrehpunkt L12, L22 von erstem, zweitem Scherenhebel L1, L2 und erster, zweiter Stützdrehpunkt L32, L42 von erstem, zweitem Stützhebel L3, L4 jeweils in der ersten, zweiten Auflage L13, L23 fluchten. Das erste, zweite Gleitende L33, L34 von erstem, zweitem Stützhebel L3, L4 ist an einem ersten, zweiten Antriebskörper S13, S14 drehbar gehalten, welche auf die Gleitfläche G1 aufgelegt sind.

Zum Verfahren der Antriebskörper S13, S14 auf der Gleitfläche G1 zur Schwenkung der Scherenhebel L1, L2 weist die Lünette L einen Linearantrieb S mit einer Gewindespindel S1 auf, welche über ein Handrad S4 durch einen Bediener manuell in Rotation versetzbar ist.

Das Werkstück W weist in der vorliegenden Ausführung einen großen Durchmesser auf, sodass der erste, zweite Scherenhebel L1, L2 und der erste, zweite Stützhebel L3, L4 überwiegend flach geschwenkt sind.

Die Lünette L weist außerdem vorteilhaft eine Oberführung F am Grundkörper G mit einer auf das Werkstück W absenkbaren dritten Auflage F251 auf.

Die Oberführung F ist ähnlich der Ausführung von Fig. 5 ausgeführt und weist eine Vertikalstütze F1 mit einer Querstrebe F11 auf, an welcher ein L-förmiger Schwenkarm gehalten und über einen Linearantrieb F3 aus Kurbelspindel und Handkurbel F31 schwenkbar an der Vertikalstütze gehalten ist. Die dritte Auflage F251 ist durch Schwenkung des Schwenkarms F2 an das Werkstück W anlegbar.

In Fig. 7 ist schließlich eine weitere vorteilhafte Ausführung einer erfindungsgemäßen Lünette L dargestellt. Der Linearantrieb S der Lünette L ist ebenso über ein Handrad S4 manuell durch einen Bediener zu verfahren. Die Lünette L weist entsprechend der vorteilhaften Ausführung von Fig. 6 eine Anordnung mit erstem, zweitem Scherenhebel L1, L2 sowie erstem, zweitem Stützhebel L3, L4 sowie einen flachen Grundkörper G auf.

Gemäß der vorteilhaften Ausführung weist die Lünette L eine Oberführung F auf, welche bogenförmig in der Art einer konventionellen Lünette ausgeführt ist. Die Oberführung weist einen Stützbogen F4 auf, welcher oberhalb des Werkstücks W angeordnet ist und über eine erste, zweite Stützstrebe F41, F42 mit dem Grundkörper G verbunden ist. Der Stützbogen F4 ist über ein Kippgelenk F43 an der zweiten Stützstrebe F42 gehalten und über eine Verriegelung F44 an der ersten Stützstrebe F41 befestigbar.

Die Oberführung F weist im Bereich der Mitte des Stützbogens F4 oberhalb des Werkstücks W die dritte Auflage F251 auf, welche über eine Gewindespindel F252 und ein Handrad F253 manuell durch einen Bediener an das Werkstück W angelegt ist.

Weitere vorteilhafte Ausführungen der Erfindung, in denen eine erfindungsgemäße Lünette L in der Art eines Rollenbocks keine Oberführung F aufweist, sind in den Figuren nicht separat dargestellt.

### Bezugszeichenliste

- L: Lünette für eine Werkzeugmaschine
- G: Grundkörper
- G1: Gleitfläche
- G2: Auflagefläche
- G3: Führungsnut
- L1, L2: erster, zweiter Scherenhebel
- L11, L21: erstes, zweites Führungsende
- L12, L22: erster, zweiter Führungsdrehpunkt
- L13, L23: erste, zweite Auflage, insb. Führungsrolle
- L14, L24: erstes, zweites Lagerende
- L15, L25: erster, zweiter Lagerdrehpunkt
- L3, L4: erster, zweiter Stützhebel
- L31, L41: erstes, zweites Stützende
- L32, L42: erster, zweiter Stützdrehpunkt
- L33, L43: erstes, zweites Gleitende
- L34, L44: erster, zweiter Gleitdrehpunkt
- S: Linearantrieb
- S1: Gewindespindel
- S11, S12: erster, zweiter Abschnitt, insb. Teilspindel
- S13, S14: erster, zweiter Antriebskörper, insb. Gleitmutter
- S15: Kopplungselement
- S2, S3: erster, zweiter Spindelmotor
- S21, S31: erste, zweite Motorsteuerung
- S4: Handrad
- F: Oberführung
- F1: Vertikalstütze
- F11: Querstrebe
- F111: Kurbellager
- F2: Schwenkarm, insbesondere L-förmig
- F21: erstes Lagerende
- F22: Lagerpunkt
- F23: Winkelpunkt
- F24: zweites Stützende
- F25: Stützdrehpunkt
- F251: dritte Auflage, insb. Führungsrolle
- F252: Gewindespindel
- F253: Handrad
- F26: Hebeöse
- F3: Linearantrieb, insb. Kurbelspindel
- F31: Handkurbel
- F32: Spindelmotor
- F321: Motorsteuerung
- F4: Stützbogen
- F41, F42: erste, zweite Stützstrebe
- F43: Kippgelenk
- F44: Verriegelung
- W: Werkstück
- W1: Mittelachse
- W2, W3: erster, zweiter Anlagepunkt
- W4: Stützwinkel

## Patentansprüche

1. Lünette (L) für eine Werkzeugmaschine mit einem Maschinenbett zur Führung eines rotationssymmetrischen Werkstücks (W), mit
- einem Grundkörper (G) zur Auflage auf das Maschinenbett,
- zumindest einem Linearantrieb (S) quer zum Maschinenbett, womit zwei Antriebskörper (S13, S14) in entgegengesetzter Richtung auf dem Grundkörper (G) verfahrbar sind,
- zwei Scherenhebeln (L1, L2), die quer zum Maschinenbett V-förmig angeordnet sind, wobei jeweils deren eines Ende (L14, L24) am Grundkörper drehbar gehalten ist und deren anderes Ende (L11, L21) eine Auflage (L13, L23) für das Werkstück (W) aufweist, und
- zwei Stützhebeln (L3, L4), die jeweils an deren einem Ende (L33, L43) an einem Antriebskörper (S13, S14) und an deren anderem Ende (L31, L41) an einem Scherenhebel (L1, L2) im Bereich einer Auflage (L13, L23) drehbar gehalten sind, sodass
der Abstand zwischen den Auflagen (L13, L23) durch scherenartige Schwenkung der Scherenhebel (L1, L2) mittels Verfahren der Antriebskörper (S13, S14) veränderbar ist.

2. Lünette (L) nach Anspruch 1, wobei der Linearantrieb (S)
eine Gewindespindel mit zwei Abschnitten (S11, S12) mit gegenläufigen Gewindegängen und darin jeweils eine Gewindemutter als Antriebskörper (S13, S14) aufweist.

3. Lünette (L) nach Anspruch 2, mit
einem Spindelmotor (S2) zum Antrieb der Gewindespindel (S1).

4. Lünette (L) nach Anspruch 1, wobei der Linearantrieb (S)
zwei fluchtende Teilspindeln (S11, S12) mit gegenläufigen Gewindegängen und daran jeweils eine Gewindemutter als Antriebskörper (S13, S14) aufweist.

5. Lünette (L) nach Anspruch 4, mit
jeweils einem Spindelmotor (S2, S3) zum Antrieb einer Teilspindel (S11, S12).

6. Lünette (L) nach einem der vorangegangenen Ansprüche, mit einer Steuerung (S21, S31) für den Linearantrieb (S).

7. Lünette (L) nach einem der vorangegangenen Ansprüche, wobei
die Scherenhebel (L1, L2) überkreuzt angeordnet und deren eine Enden (L14, L24) separat am Grundkörper (G) drehbar gehalten sind.

8. Lünette (L) nach einem der vorangegangenen Ansprüche, wobei
zumindest ein Scherenhebel (L2) über den Linearantrieb (S) annähernd bis auf den Grundkörper (G) absenkbar ist.

9. Lünette (L) nach einem der vorangegangenen Ansprüche, wobei
ein Stützhebel (L3, L4) an einem Scherenhebel (L1, L2) im Bereich zwischen dessen Auflage (L13, L23) und einem Ende (L14, L24) drehbar gehalten sind.

10. Lünette (L) nach einem der vorangegangenen Ansprüche, mit
einer Oberführung (F) am Grundkörper (G) mit einer auf das Werkstück (W) absenkbaren dritten Auflage (F251).

11. Lünette (L) nach Anspruch 10, wobei
die Oberführung (F) eine Vertikalstütze (F1) und einen daran drehbar gehaltenen Schwenkarm (F2) mit der dritten Auflage (F251) aufweist.

12. Lünette (L) nach Anspruch 11, mit
einem Linearantrieb für den Schwenkarm (F2) an der Vertikalstütze (F1).

13. Lünette (L) nach Anspruch 12, mit
einer Kurbelspindel (F3) als Linearantrieb für den Schwenkarm (F2).

14. Lünette (L) nach Anspruch 13, mit
einem Spindelmotor (F32) zum Antrieb der Kurbelspindel (F3).

15. Lünette (L) nach Anspruch 14, mit
einer Steuerung (F321) für den Spindelmotor (F32).

## Claims

1. A steady rest (L) for a machine tool with a machine bed for guiding a rotationally symmetrical workpiece (W), having
- a base body (G) for support upon the machine bed,
- at least one linear drive (S) transverse to the machine bed, with which two drive bodies (S13, S14) can be moved in the opposite direction on the base body (G),
- two shearing levers (L1, L2) which are arranged transversely to the machine bed in the shape of a V, wherein in each case their one end (L14, L24) is pivotably held on the base body and whose other end (L11, L21) has a support (L13, L23) for the workpiece (W), and
- two support levers (L3, L4), which are respectively pivotably held on their one end (L33, L43) on a drive body (S13, S14) and on whose other end (L31, L41) are pivotably held on a shearing lever (L1, L2) in the region of a support (L13, L23), so that
the distance between the supports (L13, L23) can be varied by of scissors-like pivoting of the shearing lever (L1, L2) by means of displacing the drive bodies (S13, S14).

2. The steady rest (L) according to claim 1, wherein the linear drive (S)
has a threaded spindle with two sections (S11, S12) with opposing threads and respectively a threaded nut therein as drive bodies (S13, S14).

3. The steady rest (L) according to claim 2, having
a spindle motor (S2) for driving the threaded spindle (S1).

4. The steady rest (L) according to claim 1, wherein the linear drive (S)
has two flush indexing spindles (S11, S12) with opposing threads and in each case a threaded nut thereon as a drive body (S13, S14).

5. The steady rest (L) according to claim 4, having
in each case a spindle motor (S2, S3) for driving an indexing spindle (S11, S12).

6. The steady rest (L) according to any of the preceding claims, having a controller (S21, S31) for the linear drive (S).

7. The steady rest (L) according to any of the preceding claims, wherein
the shearing levers (L1, L2) are arranged crossed over and whose one ends (L14, L24) are pivotably held separately on the base body (G).

8. The steady rest (L) according to any of the preceding claims, wherein
at least one shearing lever (L2) can be lowered approximately to the base body (G) via the linear drive (S).

9. The steady rest (L) according to any of the preceding claims, wherein
a support lever (L3, L4) is pivotably held on a shearing lever (L1, L2) in the region between its support (L13, L23) and an end (L14, L24).

10. The steady rest (L) according to any of the preceding claims, having
an upper guide (F) on the base body (G) having a third support (F251) that can be lowered onto the workpiece (W).

11. The steady rest (L) according to claim 10, wherein
the upper guide (F) has a vertical support (F1) and a swivel arm (F2) pivotably held thereon with the third support (F251).

12. The steady rest (L) according to claim 11, having
a linear drive for the swivel arm (F2) on the vertical support (F1).

13. The steady rest (L) according to claim 12, having
a crank spindle (F3) as linear drive for the swivel arm (F2).

14. The steady rest (L) according to claim 13, having
a spindle motor (F32) for driving the crank spindle (F3).

15. The steady rest (L) according to claim 14, having
a controller (F321) for the spindle motor (F32).

## Revendications

1. Lunette (L) pour une machine-outil avec un banc de machine pour guider un outil (W) symétrique en rotation, avec
- un corps de base (G) pour l'appui sur le banc de machine,
- au moins un entraînement linéaire (S) transversal au banc de machine, avec lequel deux corps d'entraînement (S13, S14) peuvent être déplacés sur le corps de base (G) dans la direction opposée,
- deux leviers croisés (L1, L2) qui sont agencés en forme de V transversalement au banc de machine, dans laquelle respectivement leur une extrémité (L14, L24) est maintenue en rotation contre le corps de base et leur autre extrémité (L11, L21) présente un appui (L13, L23) pour l'outil (W), et
- deux leviers de support (L3, L4) qui respectivement à leur une extrémité (L33, L43) contre un corps d'entraînement (S13, S14) et à leur autre extrémité (L31, L41) contre un levier croisé (L1, L2) sont maintenus en rotation dans la zone d'un appui (L13, L23), de sorte que la distance entre les appuis (L13, L23) soit modifiable par pivotement de type ciseaux des leviers croisés (L1, L2) au moyen d'un déplacement des corps d'entraînement (S13, S14).

2. Lunette (L) selon la revendication 1, dans laquelle l'entraînement linéaire (S)
présente une broche filetée avec deux sections (S11, S12) avec des pas de filetage en sens contraire et dans leur intérieur respectivement un écrou fileté en tant que corps d'entraînement (S13, S14).

3. Lunette (L) selon la revendication 2, avec
un moteur à broche (S2) pour l'entraînement de la broche filetée (S1).

4. Lunette (L) selon la revendication 1, dans laquelle l'entraînement linéaire (S)
présente deux broches partielles (S11, S12) alignées, avec des pas de filetage en sens contraire et contre eux respectivement un écrou fileté en tant que corps d'entraînement (S13, S14).

5. Lunette (L) selon la revendication 4, avec
respectivement un moteur à broche (S2, S3) pour l'entraînement d'une broche partielle (S11, S12).

6. Lunette (L) selon l'une des revendications précédentes, avec
une commande (S21, S31) pour l'entraînement linéaire (S).

7. Lunette (L) selon l'une des revendications précédentes, dans laquelle
les leviers croisés (L1, L2) sont agencés en se recoupant et leurs une extrémité (L14, L24) sont maintenues en rotation séparément contre le corps de base (G).

8. Lunette (L) selon l'une des revendications précédentes, dans laquelle
au moins un levier croisé (L2) est abaissable par l'entraînement linéaire (S) approximativement jusqu'au corps de base (G).

9. Lunette (L) selon l'une des revendications précédentes, dans laquelle
un levier de support (L3, L4) est maintenu en rotation contre un levier croisé (L1, L2) dans la zone entre l'appui (L13, L23) de celui-ci et une extrémité (L14, L24).

10. Lunette (L) selon l'une des revendications précédentes, avec
un guidage supérieur (F) contre le corps de base (G) avec un troisième appui (F251) abaissable sur l'outil (W).

11. Lunette (L) selon la revendication 10, dans laquelle
le guidage supérieur (F) présente un support vertical (F1) et un bras pivotant (F2) maintenu en rotation contre lui avec le troisième appui (F251).

12. Lunette (L) selon la revendication 11, avec
un entraînement linéaire pour le bras pivotant (F2) contre le support vertical (F1).

13. Lunette (L) selon la revendication 12, avec
une broche à billes (F3) en tant qu'entraînement linéaire pour le bras pivotant (F2).

14. Lunette (L) selon la revendication 13, avec
un moteur à broche (F32) pour l'entraînement de la broche à billes (F3).

15. Lunette (L) selon la revendication 14, avec
un guidage (F321) pour le moteur à broche (F32).
